Europäisches Patentamt

European Patent Office

Office européen des brevets

(19)

(11) **EP 1 184 808 A2**

(12) **EUROPEAN PATENT APPLICATION**

(43) Date of publication:
**06.03.2002 Bulletin 2002/10**

(51) Int Cl.[7]: **G06T 7/00**

(21) Application number: **01203137.3**

(22) Date of filing: **17.08.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **29.08.2000 US 650203**

(71) Applicant: **EASTMAN KODAK COMPANY**
**Rochester, New York 14650 (US)**

(72) Inventors:
 • **Lee, Yongchun**
  **Rochester, New York 14650-2201 (US)**
 • **Rudak, Peter**
  **Rochester, New York 14650-2201 (US)**

(74) Representative: **Parent, Yves et al**
 **KODAK INDUSTRIE, Département Brevets, CRT**
 **- Zone Industrielle**
 **71102 Chalon-sur-Saône Cedex (FR)**

(54) **Method for detection of skew angle and border of document images in a production scanning environment**

(57)    A method for detection of a skew angle and a border of a document scanned by a production scanner comprise the steps of:

(a) detecting a page start signal;
(b) capturing an image line;
(c) checking for an end of page signal;
(d) if an end of page signal is detected go to step (h), if no end of page signal is detected go to step (e);

(e) detecting image edge pixels;
(f) performing a single pass connected contour pixel component analysis;
(g) go to step (b);
(h) collecting the connected contour pixel components;
(i) selecting a largest component; and
(j) analyzing the largest component to obtain the skew angle and border of the document.

FIG. 4

**Description**

This invention relates in general to the field of scanning documents and more particularly to detecting a skew angle of documents on the scanner and reorienting the digitized image.

When a paper document is scanned by a production scanner, the resulting digital image is often skewed. The causes of a skewed image may be that the document was not fed properly, or that the paper transport mechanism is out of alignment. The skew of a document image produces an unpleasant effect on viewing an image. In addition, it results in additional complexities in optical character recognition, document segmentation, and document analysis. Hence, automatic image skew detection and correction are a desired feature in a document scanning system.

In a production scanning environment, a stack of documents to be scanned often contain different paper sizes. It is impossible to adaptively adjust the CCD scan width to fit all document sizes. To avoid cutoff of a document, the CCD scanning width is often set to a scan a range wider than the document. This results in an unwanted border, either in black or in white, surrounding the original document in the digital image. To produce a digital version which is identical to the appearance and size of the original document, a border detection and removal function in the system is required.

Two U.S. Patents No. 5,818,976 Method and Apparatus for Document Skew and Size/Shape Detection, and No. 5,901,253 Image Processing System with Image Cropping and Skew Correction, discuss skew angle detection and image border detection for a scanned document. A disadvantage of both methods is the requirement of a clean, uniform background border in order to estimate a skew angle of a document, and to locate the a document page. In a high speed production scanning environment for example, rotary scanning, the background border often contains portions of both the preceding document and the following document, and appears noisy in gray scale due to dust and dirts. The interference of adjacent document images and noises in the background border make the prior art solutions difficult to implemented practically in a high speed scanning system. Another disadvantage of the prior art techniques in border detection is their limitation in handling non-rectangular documents or photographs.

The present invention is related to an image processing method which is comprised of automatic document skew angle detection, border detections and border removal for any kind of document shapes in an environment having a noisy background, such as interference of adjacent scanned pages and noises in a high speed production scanner.

Briefly, according to one aspect of the present invention a method for detection of a skew angle and a border of a document scanned by a production scanner comprise the steps of:

(a) detecting a page start signal;
(b) capturing an image line;
(c) checking for an end of page signal;
(d) if the end of page signal is detected go to step (h), if no end of page signal is detected go to step (e);
(e) detecting image edge pixels;
(f) performing a single pass connected contour pixel component analysis;
(g) go to step (b);
(h) collecting the connected contour pixel components;
(i) selecting a largest component; and
(j) analyzing the largest component to obtain the skew angle and border of the document.

According to one embodiment of the invention the method generally comprises the steps of capturing a document image by a linear CCD array in raster scan fashion and detecting image edge pixels from the captured gray scale image. The connected image contour pixels are traced and grouped and the largest connected contour pixel component is selected as the outline component of the scanned document page. The selected contour component is analyzed to obtain the skew angle and the boundary of a scanned page.

The invention and its objects and advantages will become more apparent in the detailed description of the preferred embodiment presented below.

Figure 1 is an example of digital images captured by a high speed production scanner without stop and end signals.

Figure 2 is an example of a first captured image frame.

Figure 3 is an example of a second captured image frame.

Figure 4 is a flow chart outlining the steps of individual image capture and processing in the present invention.

Figure 5 is a flow chart showing the steps of detecting image edge pixels.

Figure 6 shows the position index of 3-by-3 cells for calculating gradient strength.

Figure 7 is a flow chart showing the two major processes of performing a single pass connected contour pixel component analysis.

Figure 8 shows the steps for extracting contour pixels using a look up table.

Figure 9A illustrates the generation of a table integer entry from a 3-by-3 bitmap.

Figure 9B is an example of generation of a table integer entry.

Figure 9C is an example of generation of template commands using a look up table.

Figure 10 a schematic showing four connecting chain codes.

Figure 11 is a flow chart illustrating the conversion of template commands into a double link list data chain in tracking and extracting the connected contour components.

Figures 12A-E are examples of the step-by-step process for constructing a double link-list data chain for tracking connected contour pixels and for extracting all contour components.

Figure 13 is a schematic of the seven extracted connected contour components in Figure 3.

Figure 14 is a block diagram for computing skew angle of a contour component.

Figure 15 is shows the contour of a largest component which is taken as the outline of a page for shape, size, and skew angle analysis.

Figure 16 is an example of histogram chart of vertical distance Dy as shown in Figure 15.

Figure 17 is an example illustrating the physical intersection points between image scanning lines and the outline of a page.

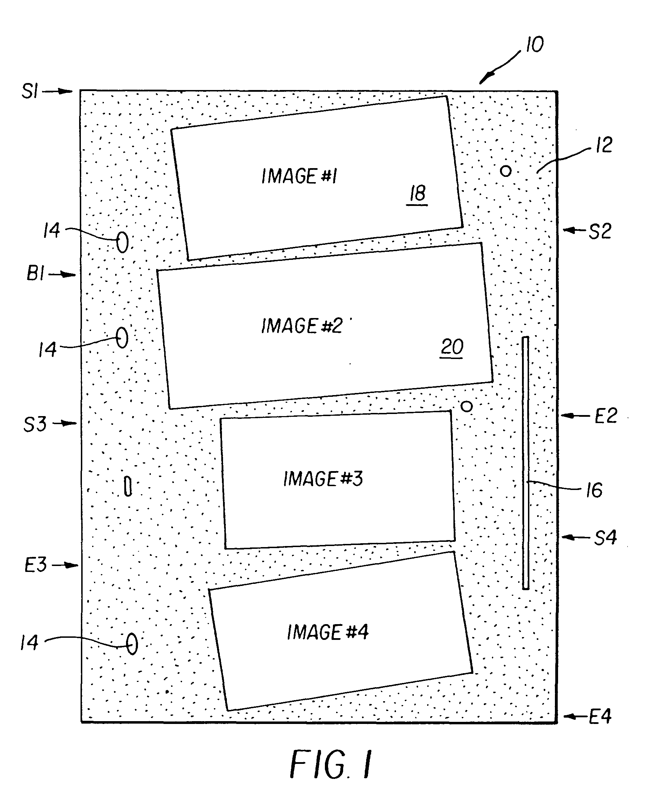

Figure 1 is a graphical example of the resulting image 10 captured by a high speed production scanner if the electronic device which signal start of a scanned page (S1, S2, S3, S4, ...) and end of a scanned page (E1, E2, E3, E4, ...) are off. Each scanned page may have different skew direction. The background black border 12 contains background noises 14 and vertical lines 16 due to dust or dirt blocking the illumination path of light source when a scanning is in progress. Because of high speed paper transport and capture, any two consecutive images 18, 20 can be captured one after the other in very short instance, and the gap between the two captured page images can be very small, and the image content of a current page can contain portions of the preceding and following page images.

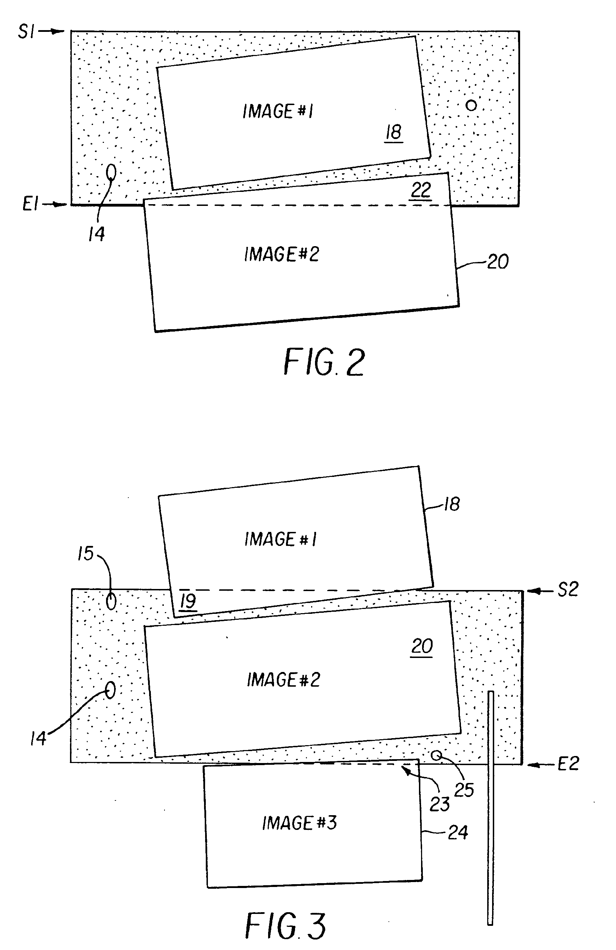

In a scan, the S signal (i.e. S1, S2, S3, S4) usually triggers the scanner to start a capture of a new page 18, and the E signal (i.e. E1, E2, E3, E4) stops the capture of a page. The S and E signals are to approximately locate each scanned page. Figure 2 shows the region of the captured Image #1 which also contains a small top portion 22 of the following page image (Image #2) and noises. The captured current image 20 as shown in Figure 3 then contains small portions 19 of the preceding page image 18 and small portion 23 the following page image 24 and some unwanted background noises 14.

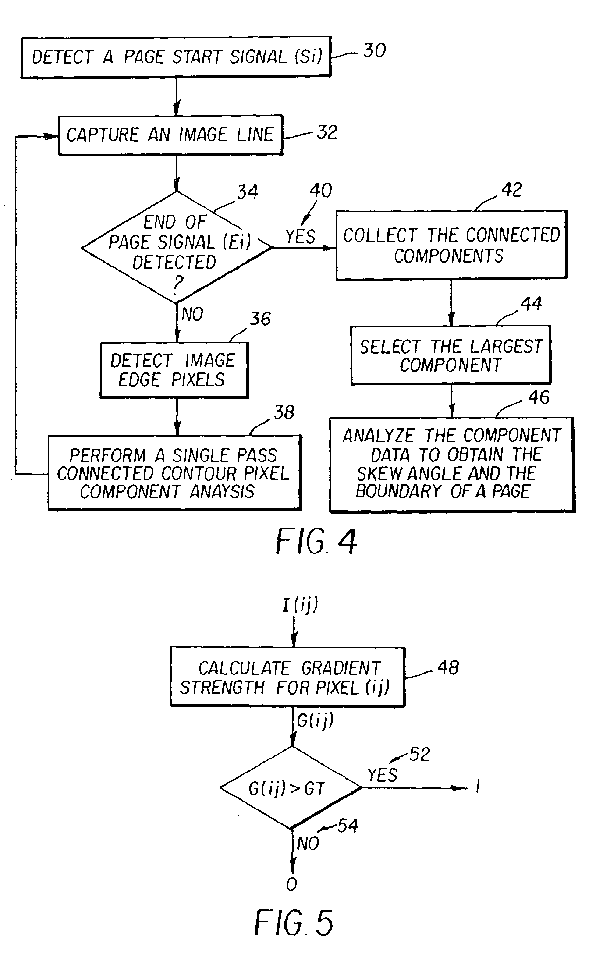

The processing steps of the method in the present invention for detecting skew angle and the boundary of the current page image are shown in Figure 4. A page start signal (Si) 30 triggers the beginning of a new scan page and starts capturing image line-by-line 32 while a paper document is traveling, until a page ending signal (Ei) is detected 34. During the scan, every scanline goes through a process of detecting image edge pixels 36, and a single pass connected contour pixel component analysis 38 is immediately followed to group the connected contour pixels. The two operations are repeated on every scanline, until a page end signal is detected 40. At the end of a page scan, the output of the two processes is a connected component data. The connected components data is collected 42. Each component data set contains the coordinates of the contour pixels and its physical size, comprised of component width and component height. The largest component is selected 44 and taken as the page outline component. The skew angle and the boundary of the scanned page are then obtained 46 by analysis of the page outline component data. The detail descriptions of the three major processes: detection of image edge pixels; a single pass connected outline pixel component analysis; and skew angle and page boundary analysis, are presented in the following three sections.

Detecting Image Edge Pixels

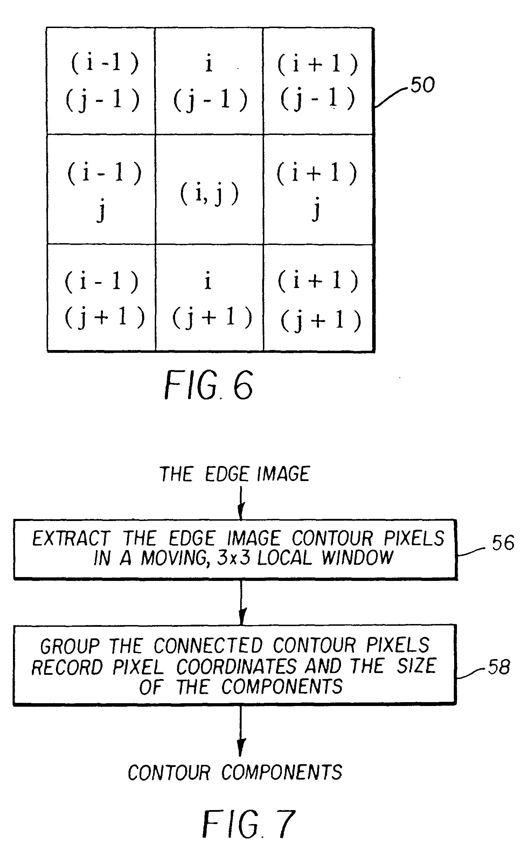

The method for detection of image edge pixels is depicted in Figure 5. The detection converts each pixel intensity I(i,j) whose value is between 0 - 255 into a bitmap form. The pixel at the output marked a s"1" is considered as edge pixel and the pixel assigned to "0" is non-edge pixel. First, a gradient strength for the pixel is calculated 48. Gradient strength for pixel (i,j) is determined by use of the so-called "Sobel" gradient operator on a 3-by-3 window of pixels 50 centered about pixel (i,j) as shown in Figure 6. The Sobel operator relies on computing horizontal and vertical pixel intensity gradients, GX(i,j) and GY(i,j), respectively, and for each pixel position (i,j) forming the gradient strength G(i,j) as an absolute sum of GX(i,j) and GY(i,j). The equations of the GX(i,j), GY(i,j) and G(i,j) are defined as:

$$GX(i,j) = I(i+1,j-1)+2(i+1,j) + I(i+1,j+1)$$

$$-I(i-1,j-1) - 2I(i-1,j) - I(i-1,j+1)$$

$$GY(i,j) = I(i-1, j+1) + 2\, I(i, j+1) + I(i+1,j+1)$$

$$-I(i-1,j-1) - 2I(i,j-1) - I(i+1,j-1)$$

$$G(i,j) = |GX\ (i,j)| + |GY(i,j)|$$

where G(i,j) is the gradient strength at pixel (i,j). As shown in Figure 5, the value G(i,j) is compared to a constant GT. If G(i,j) is greater than GT 52, the pixel is interpreted as edge pixel and marked as "1". Otherwise, the pixel is interpreted as non-edge pixel 54 and marked as "0". This process is completed for each pixel of a scanline and produces an edge bitmap line.

A Single Pass Connected Contour Pixel Component Analysis

Prior techniques to extract the connected outline pixel components can be found in, "Some Experiments in Imaging Vectorization", by J. Jimenez and J. L. Navalon, IBM J res. Develop., vol. 26, No 6, pp. 724-734; "Transforming a Two-Level Image into Contour Vector," by J. Ohta in U.S. Patent No. 5,357,602; and "Chain-Link Coding and Segmentation for Raster Scan Devices," by L. T. Cederberg, Computer Vision, Graphics and Image Processing, vol. 10, pp. 224-234. These prior art methods are not suitable for use in high speed production scanning because they are either not a single pass processing or not computationally efficient. The following method describes a fast, single pass outline pixel component analysis suitable to practical use in high speed scanning systems.

Figure 7 shows the two steps of the processes of the method for extracting the connected contour pixel components in a single pass processing. It reads in the detected edge bitmap in line-by-line fashion. The contour pixels are detected in a moving 3-by-3 local window 56 by means of look up table method and the detected contour pixels are grouped 58 with the connected contour pixels and recorded in a double link list data chain. The details of the use of look up table and the construction of a link list data chain are described below.

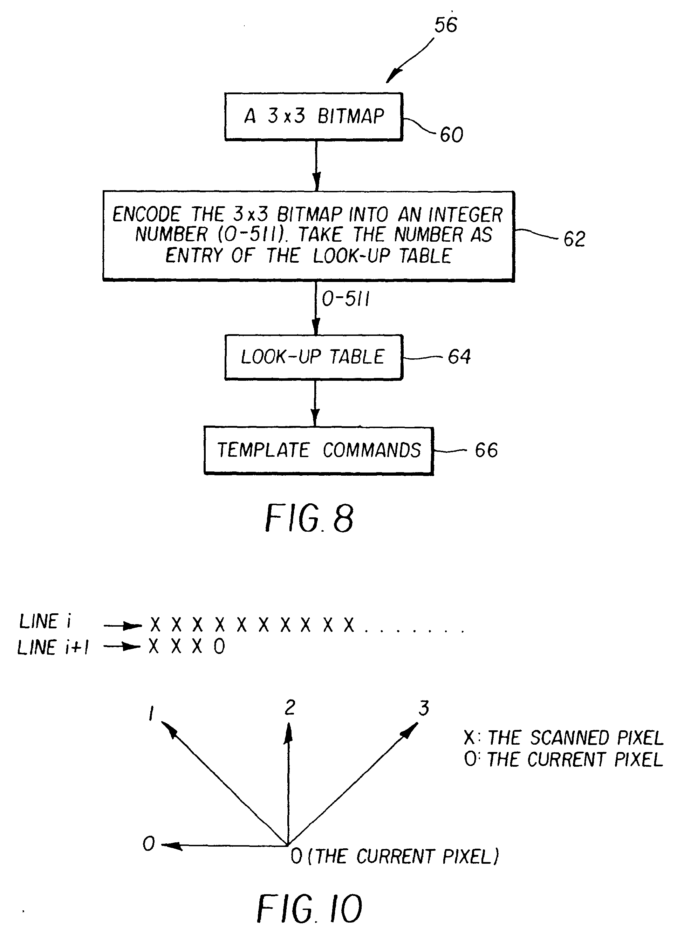

Figure 8 shows the steps of contour pixel extraction 56. The detection of a contour pixel requires its 3-by-3 neighboring pixels to constitute its connectivity with other contour pixels. Hence, the input 60 is a 3-by-3 edge bitmap taken from the previous edge detection. The 3-by-3 bitmap represents the nine cells that lie within a 3-by-3 window at one instant in time as the window is scanned over the edge bitmap lines. Since the value of each cell is either a 0 or a 1 (2 status), the number of bitmap patterns in a 3-by-3 window (9 elements) is 512 (2 power of 9). The 512 patterns are labeled as 0 - 511. In step 62 each number is corresponding to a 3-by-3 bitmap pattern. This information is used as a look up table, step 64, in order to derive template commands, step 66.

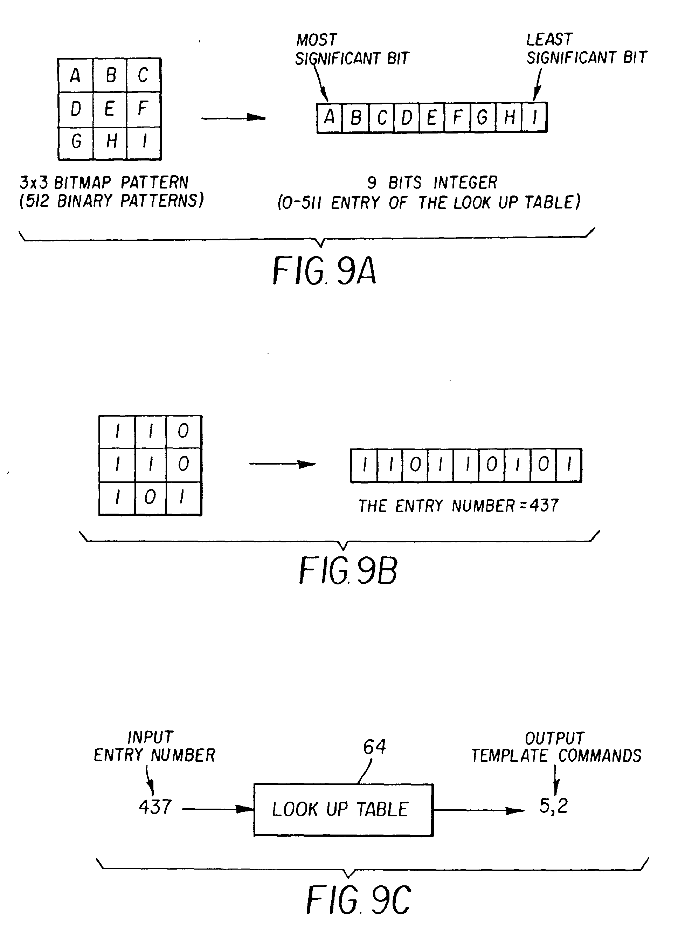

This is illustrated with the specific example as shown in Figure 9A. The bits A through I are arranged in a specific order so as to form a 9-bit integer, the 9-bit integer range in value between 0 and 511. The specific bit pattern selected for the Figure 9B example results in the integer 437 being formed. This integer is then used as an entry number to address the look-up-table as shown in Figure 9C, to output the associated template commands, in this case template commands 5, 2. Table 1 illustrates the relationship between a particular 3-by-3 bitmap and its associated entry number. The entry number being generated according to the procedure previously illustrated in Figure 9C. Table 1 also shows the template commands that are outputted from the look-up-table when the corresponding entry number is applied as an address to the look-up table 64.

Table 1

| 3x3 bitmap pattern | Entry number | Template command |
|---|---|---|
| 000 000 000 | 0 | none |
| 000 000 001 | 1 | none |
| • | • | • |
| • | • | • |
| • | • | • |
| 000 010 101 | 21 | 4,5 |

Table 1   (continued)

| 3x3 bitmap pattern | Entry number | Template command |
|---|---|---|
| • | • | • |
| • | • | • |
| 000 | | |
| 010 | 23 | 4 |
| 111 | | |
| • | • | • |
| • | • | • |
| • | • | • |
| • | • | • |
| • | • | • |
| • | • | • |
| • | • | • |
| • | • | • |
| 101 | | |
| 110 | 368 | 0,1,3,6,3,6 |
| 000 | | |
| • | • | • |
| • | • | • |
| • | • | • |
| • | • | • |
| 110 | | |
| 110 | 437 | 5,2 |
| 101 | | |
| • | • | • |
| • | • | • |
| • | • | • |
| 111 | | |
| 111 | 511 | none |
| 111 | | |

The template commands, step 66, encode the relationship of the center cell and its neighboring cells in a 3-by-3 bitmap. This template commands are ranged from 0 to 6, and are defined in Table 2.

Table 2

| Template Command | Command Definition |
|---|---|
| 0 | Add chain code 0 |
| 1 | Add chain code 1 |
| 2 | Add chain code 2 |
| 3 | Add chain code 3 |
| 4 | Initiate a new outer maximum contour point |
| 5 | Initiate a new inner maximum contour point |
| 6 | Merge two incoming border pixel chains |

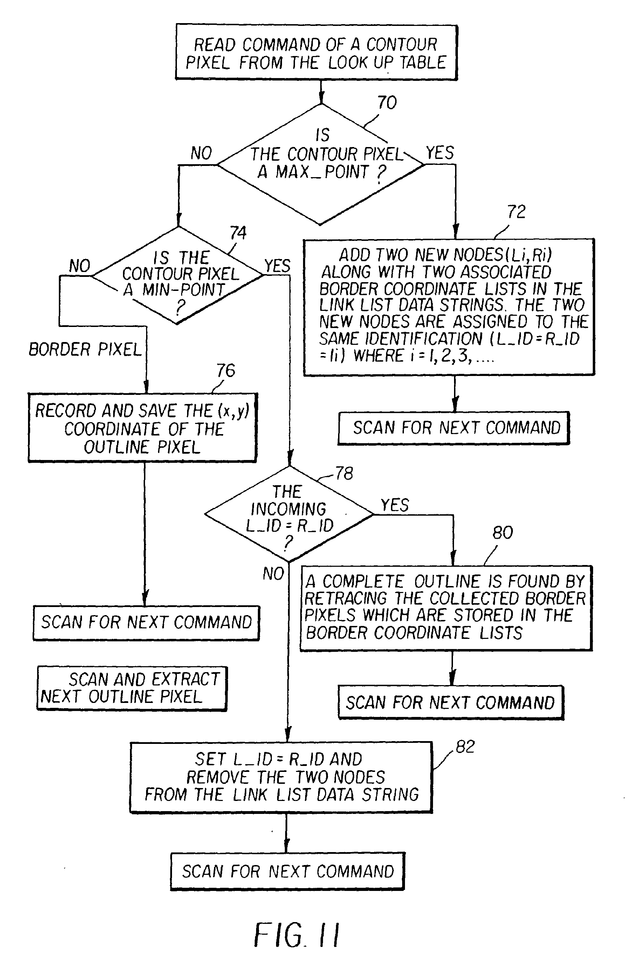

In a 3-by-3 bitmap, the relationship of a center cell with its neighboring cells can be classified into one or combination of the four conditions: border transition, local maximum, local minimum and non-border. A border transition cell has four possible orientations (0 degree, 45 degree, 90 degree and 135 degree) connecting to its four adjacent pixels in a 3-by-3 bitmap as shown in Figure 10. The four connecting orientations are encoded as commands 0, 1, 2, 3, respectively. All possible local maximum 3-by-3 patterns are shown in Table 3.

Table 3

| | |
|---|---|
| 000 | 000 |
| 011 | 010 |
| 1xx | 100 |
| | |
| 000 | 000 |
| 010 | 010 |
| 1x1 | 010 |
| | |
| 000 | 000 |
| 011 | 010 |
| 01x | 001 |
| | |
| 000 | 000 |
| 010 | 011 |
| 110 | 000 |
| | |
| 000 | xxx |
| 010 | x11 |
| 011 | 100 |
| | |
| 000 | xxx |
| 011 | x1x |
| 001 | 101 |

A local maximum cell for outer contour and for inner contour are encoded as command 4 and 5, which initiates a start of tracking two border pixel strings, respectively. All possible local minimum 3-by-3 patterns are shown in Table 4.

Table 4

| | |
|---|---|
| xx1 | 001 |
| 110 | 010 |
| 000 | 000 |
| | |
| 1 x | 010 |
| 1 | |
| 010 | 010 |
| 000 | 000 |
| | |
| x10 | 100 |
| 110 | 010 |
| 000 | 000 |
| | |
| 110 | 001 |
| 010 | 110 |
| 000 | 000 |
| | |
| 110 | 001 |
| 010 | 11x |
| 000 | xxx |

Table 4 (continued)

| 100 | 101 |
|-----|-----|
| 110 | x1x |
| 000 | xxx |

A local minimum cell is encoded as command 6 which merges and removes two incoming border pixel strings. A non-border cell is assigned no command. No action is taken when a 3-by-3 window is in a flat region of the edge bitmap.

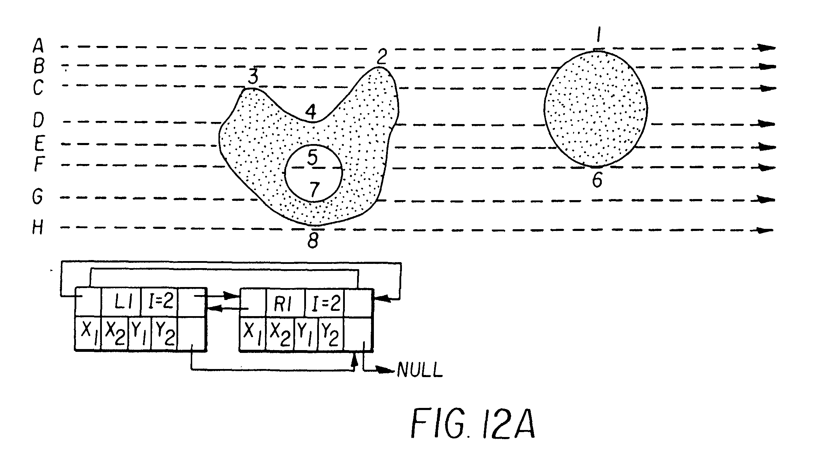

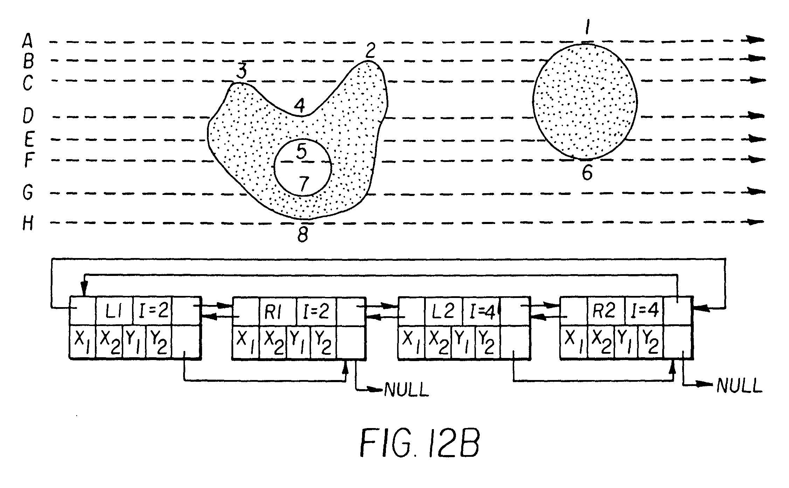

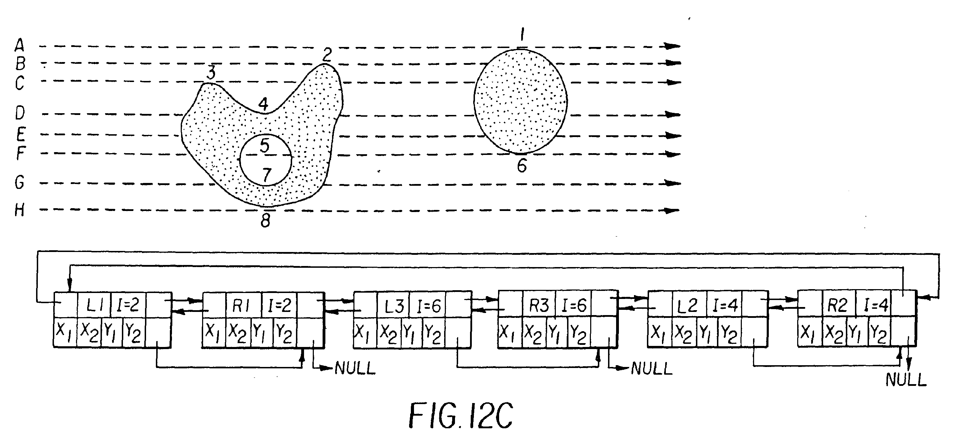

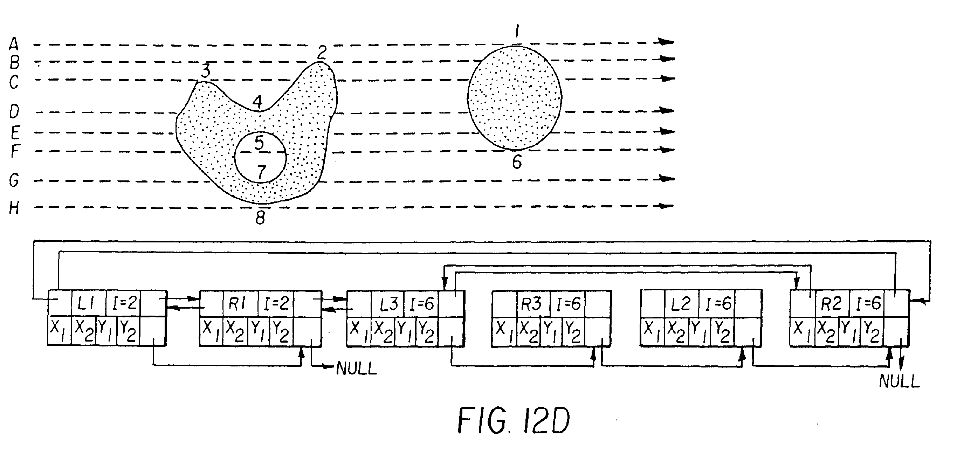

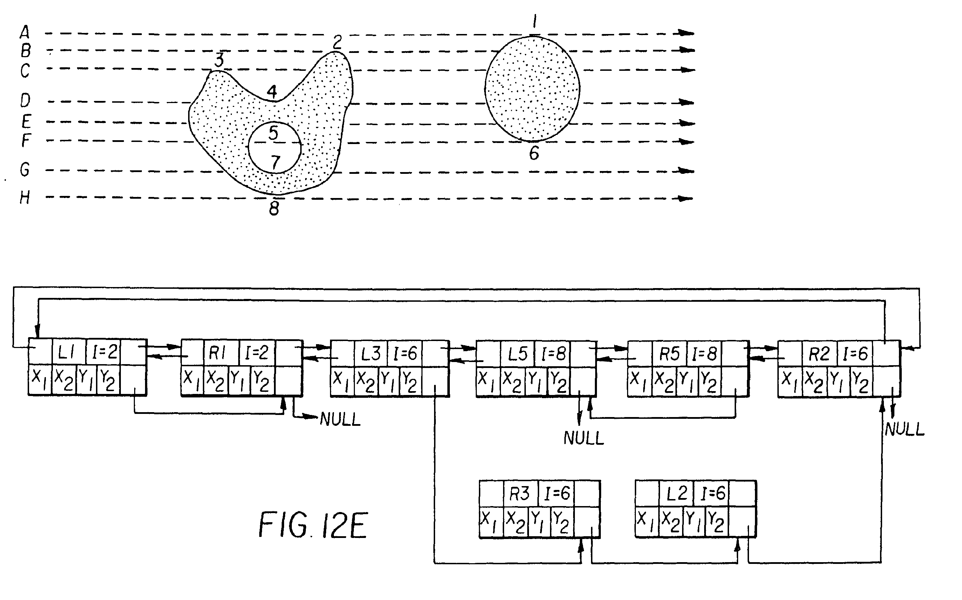

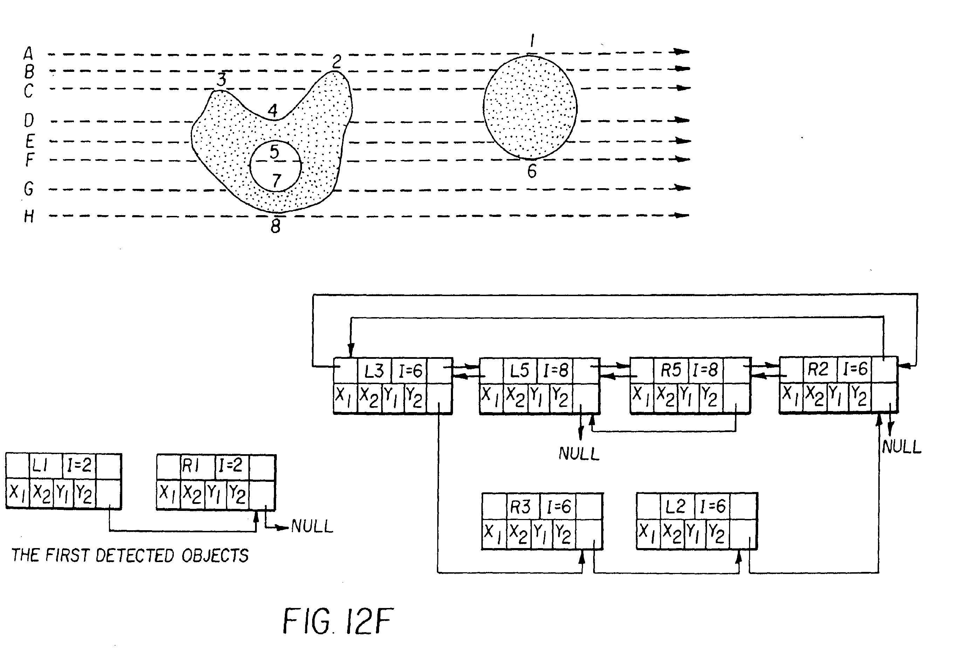

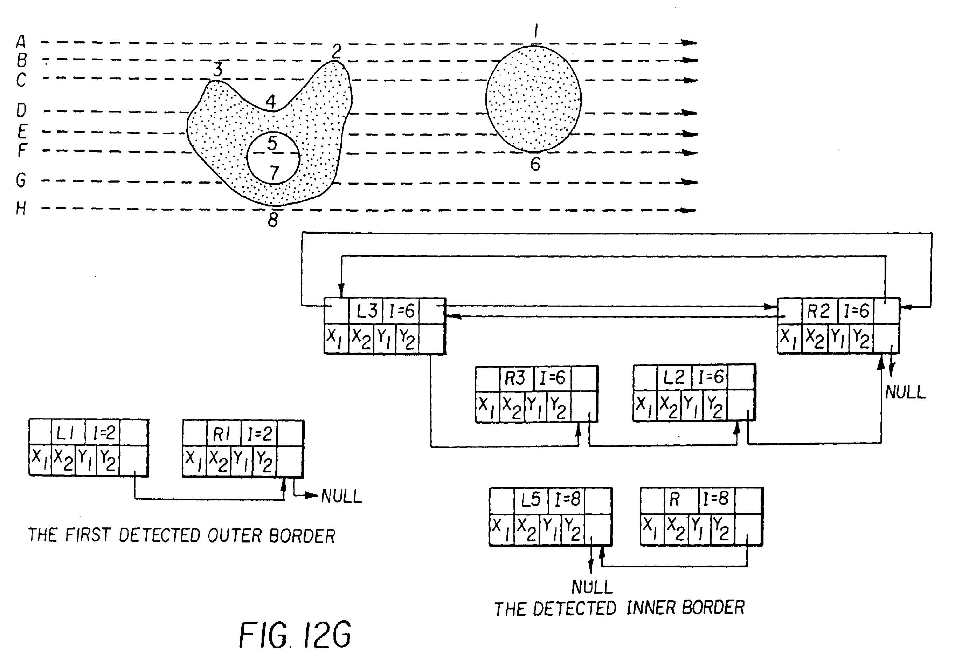

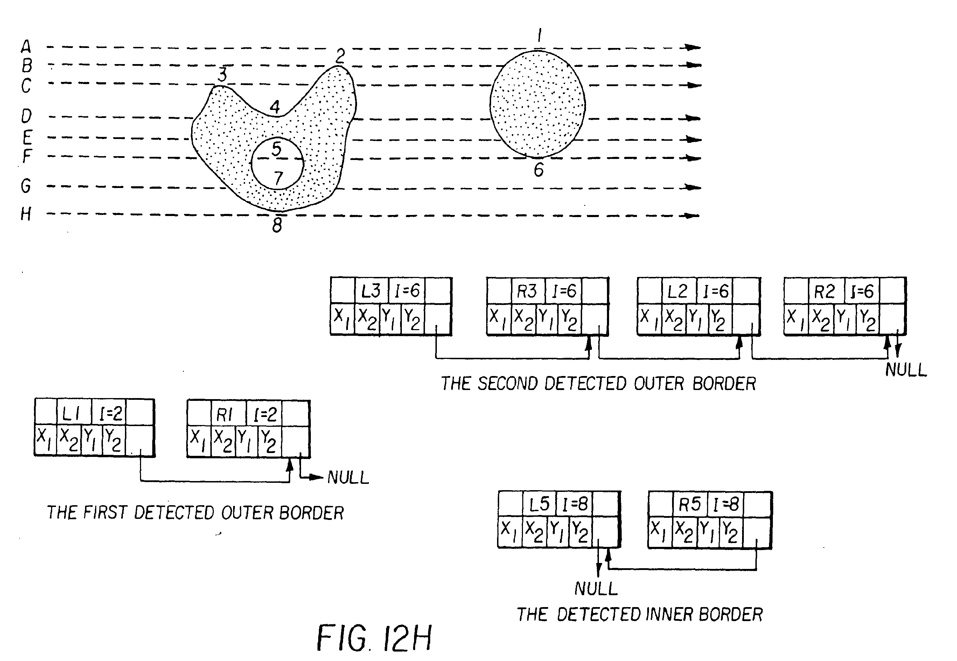

Figure 11 is a block diagram of grouping and recording the connected contour pixels by reading and executing the string of template commands which are generated in an image raster scan fashion. The output of the process is a collection of contour pixel components. Each component data set contains the (x, y) coordinates of contour pixels and its size (width and height). The recording and grouping of the contour pixel components starts with a command which indicates a contour pixel. The command is tested 70 to determine if it is a local maximum (max_point) or not. If it is, two new nodes (Li, Ri), along with two associated border coordinate lists in the link list data string. The two new nodes are assigned to the same identification 72, that is, the left hand sided identification L_ID is set to equal to the right hand sided R_ID. After which the next template command is read, or the new 3-by-3 bitmap is read for new set of commands, to continue for a next contour pixel. If a command does not indicate a max_point, the command is tested as it is a local minimum (min _point) 74, if it is not, then it is a contour transition pixel whose (x, y) coordinate is saved 76 and the next command is read to extract next contour pixel. If it is a local minimum, the identifications of the two merging contour strings, L_ID and R_ID, are tested 78 if they are the same. If it is, then a complete contour is found and the coordinates of the border pixels are collected by retracing the link list nodes 80. If it is not, then the L_ID is set equal to L_IR and remove the two nodes from the link list data string 82 and continue the next template command to start with as shown in Figure 12.

An example of a link list construction for recording contour pixels is depicted in Figure 12A, 12B, 12C, 12D and 12E. A scanning of the bitmap image from left to right detects a local maximum at 1 in scanline A. When detected, two new nodes (L1, R1), and their L_ID and R_ID are set to a number I=2. The bounding coordinates of the border strings are recorded as (X1, Y1) and (X2, Y2). Next local maximum 2 is detected at scanline B, two additional nodes (L2, R2) are formed to the right of L1 and R1. Continuing the scan, another local maximum 3 is detected at scanline C, two additional nodes (L3, R3) are formed in between the nodes (L1, R1) and the nodes (L2, R2). At the scanline D, a local minimum 4 is detected and signals the merge of the two border chains, R2 and L2. As a result the two nodes, R3 and L2, are removed from the link list loop by resetting the forward'pointer of L3 pointing to R2 pointing to L3. It also indicates that the nodes (L2, R2) and (L3, R3) are part of the same contour and their identifications, L2_ID, R2_ID, L3_ID and R3_ID, are set to the same identification number. In this case, the number I is 6. Continuing the scan, at the scanline E, a new local maximum is detected and two nodes (L5, R5) is inserted in the between the L3 and the R2. A local minimum 6 is detected at the scanline F, it signals the merge of the two incoming border chains, L1 and R1. Since the L1_ID is equal to R1_ID (=2), it indicates that a connected contour pixel component is completed and saved, and the nodes L1 and R1 are removed from the link list loop. The scan is resumed and the detection continues until the end of the bitmap as shown in Figure 12C, 12D, and 12E. At the end of the process, three contours are extracted and the coordinates of contour pixels are read out from the recorded link list chains.

Calculation of Skew Angle and Boundary of a Scanned Page

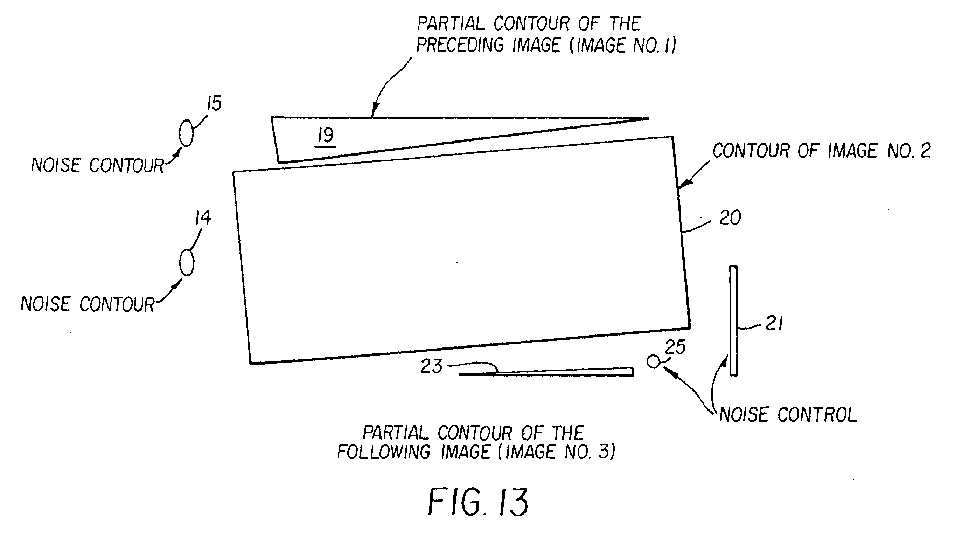

Figure 13 displays the extracted contour components for the image 20 in Figure 3 obtained by the processes described in the previous section. There are seven extracted contour components which are labeled 14, 15, 19, 20, 21, 23, 24, and 25 for the purpose of identification of components. These contour components are either outlines of a scanned pages or contours of noise dots. The largest component which is labeled as 20 is located in the center of the frame is identified as the outline of the page of interest. The component data, which is stored in term of a string (x, y) coordinates along the trace of contour, is taken for analysis to obtain skew angle and the boundary of the scanned page.

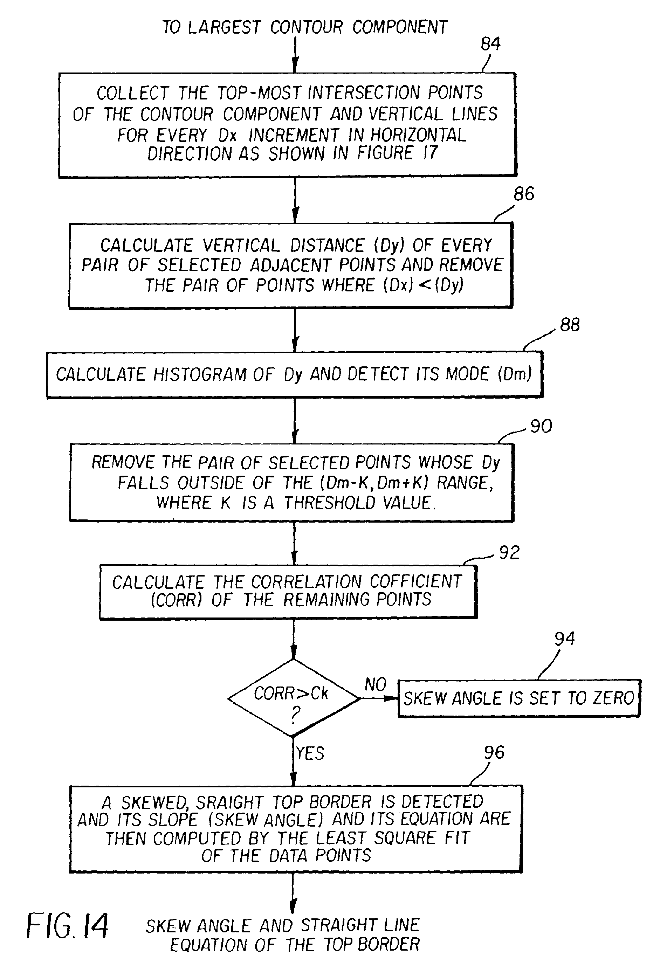

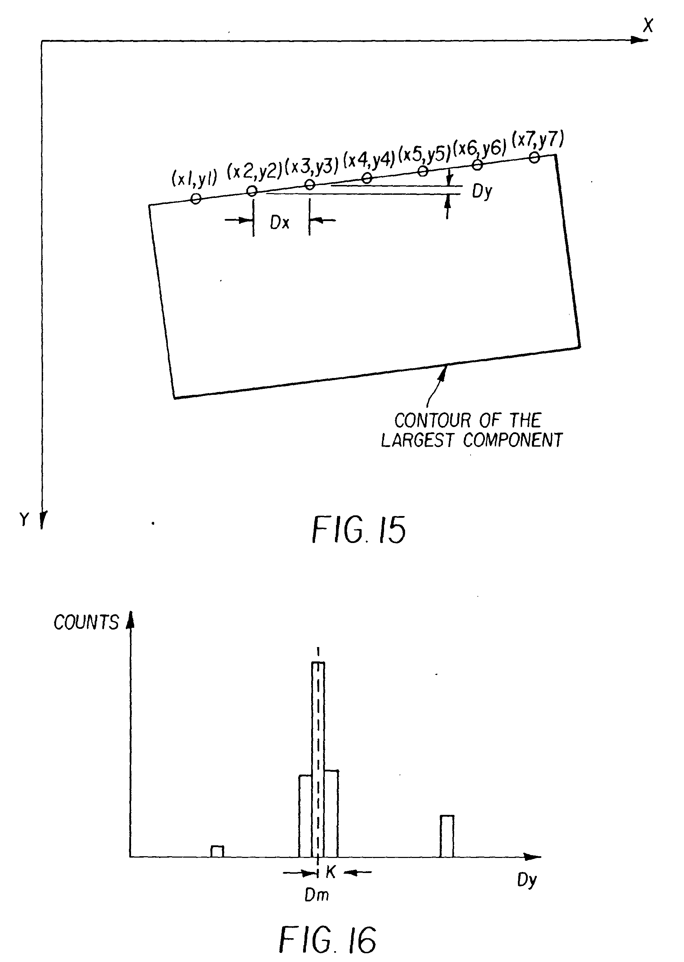

The skew angle is estimated based on the coordinates of the contour points corresponding to the top border of the page as shown in Figure 14. The contour points in the top border are taken in every Dx increment in horizontal direction 84. The corresponding vertical distance Dy of every pair of subsampled adjacent points is calculated 86. For every pair of subsampled adjacent points in the top border, the $|Dx|$ value must be greater than the $|Dy|$ value. Therefore, the pairs of points which shows $|Dx| < |Dy|$ are removed from the recorded data set because they do not belong to the top border. The remaining data is used to construct a histogram 88 in which the horizontal axis is labeled as Dy and the vertical is labeled the number of Dy counts as shown in Figure 15. The mode (Dm) of the histogram Dy is defined as the value of Dy with the greatest number of hits. To minimize the data points which are associated with the boundary noises of a page, those data points, which Dy values fall outside the range of Dm-K and Dm+K 90 as shown in Figure 16, are also deleted, where K is a threshold value. After the process of data cleanup, the remaining data points is evaluated for linearity in the (x, y) domain. The linear correlation coefficient (Corr) is calculated 92 and taken as a measure of confidence level in detecting a skewed straight line. If confidence level is below the specified threshold (Ck), the skew angle is set to zero 94. This indicates the page of interest is either upright or it contains irregular top border. On the other hand, if confidence level is greater than the specified threshold, then it concludes that a slant, straight top border is detected and the equation of the straight line is computed by the least square fit of the data points 96. The skew angle is read from the slope of the fitted straight line, which is arctangent (slope).

The correlation coefficient is determined as follows. Assume the coordinates of the point are (xi, yi), where I=1, ..., N and N is the number of the remaining data points. The correlation ($r_{xy}$) is defined by $r_{xy}$ = Sxy/(SxSy).

The correlation coefficient ($r_{xy}$) is defined by

$$r_{xy} = \frac{S_{xy}}{S_x\,S_y}, \text{ where } S_{xy} = \sum_{i=0}^{N}\left(x_i - \bar{x}\right)\left(y_i - \bar{y}\right)$$

and

$$S_x = \sqrt{\sum_{i=1}^{N}\left(x_i - \bar{x}\right)^2}, \quad S_y = \sqrt{\sum_{i=1}^{N}\left(y_i - \bar{y}\right)^2}$$

The value of the correlation coefficient is between zero and one, according to the definition. If the correlation coefficient is close to one, it indicates that these points are collinear, and the linear least square fit is applied to these points. The rotating angle $\theta_S$ is read from the slope ($\theta_S$ = b) of the fitted straight line, y = a + bx , where

$$b = \frac{\sum_{i=1}^{N} x_i y_i - N\overline{xy}}{\sum_{i=1}^{N} x_i^2 - N\,\bar{x}^2}, \bar{x} = \sum_{i-1}^{N} x_i, \bar{y} = \sum_{i=1}^{N} y_i.$$

The rotating angle is taken as the skew angle of the scanned documents.

The value of the coefficient is between zero and one, according to the definition. If the correlation is close to one, it indicates that these data points has perfect linear relationship and the points can be fitted into a straight line, y = a + b x, where the angle which is the skew angel of a scanned page is calculated as the arctangent (b).

Since the coordinates (x, y) of contour points of a component are sequentially recorded along trace of a contour it requires to reorganize the contour points so that the black border removal can be made in line-by-line order. The data reorganization is made by sorting the points based the y-coordinate values and stored in a top-to-bottom order. In every y-coordinates, it corresponds to a list of intersection points marked in x-coordinates as shown in Table 5.

**X – COORDINATES OF INTERSECTION POINTS**

SCAN LINES (Y-COORDINATES OF INTERSECTION POINTS)

| | x1 | x2 | x3 | x4 | x5 | x6 | x7 | x8 |
|----|----|----|----|----|----|----|----|----|
| 1 | x1 | x2 | x3 | x4 | x5 | x6 | | |
| 2 | x1 | x2 | x3 | x4 | | | | |
| 3 | x1 | x2 | x3 | x4 | x5 | x6 | x7 | x8 |
| 4 | x1 | x2 | x3 | x4 | x5 | x6 | x7 | x8 |
| 5 | x1 | x2 | x3 | x4 | | | | |
| 6 | x1 | x2 | x3 | x4 | x5 | x6 | | |
| 7 | x1 | x2 | x3 | x4 | x5 | x6 | | |
| 8 | x1 | x2 | x3 | x4 | | | | |
| 9 | x1 | x2 | | | | | | |
| 10 | x1 | x2 | | | | | | |
| 11 | x1 | x2 | | | | | | |
| • | • | • | | | | | | |
| • | • | • | | | | | | |
| • | • | • | | | | | | |
| • | • | • | | | | | | |
| • | • | • | | | | | | |
| • | • | • | | | | | | |
| • | • | • | | | | | | |
| • | • | • | | | | | | |
| • | • | • | | | | | | |
| N | x1 | x2 | x3 | x4 | x5 | x6 | x7 | x8 |

## Table 5

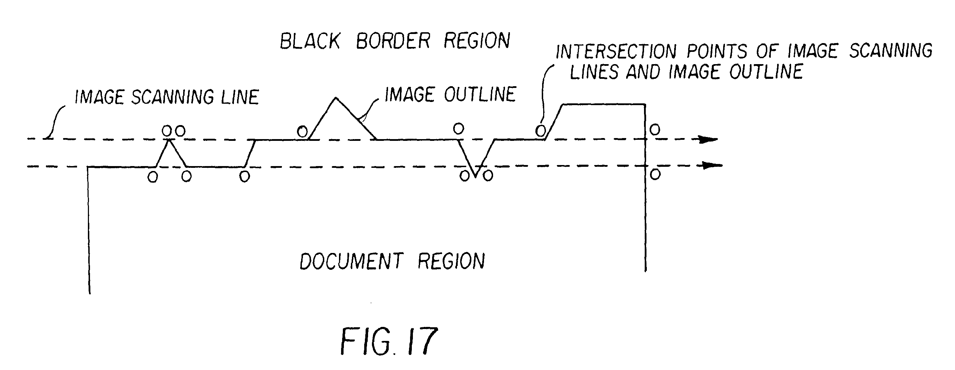

The x-coordinates in table are the intersection points between image scanning line (y-coordinate) and the image outline which are illustrated in Figure 17. Note that at the tip comer of a contour the intersection point marked with "o" is duplicated in order to guarantee an even number. The x-y coordinates table is applied to border removal either for gray scale image or for binary image.

## Claims

**1.** A method for detection of a skew angle and a border of a document scanned by a production scanner comprising the steps of:

(a) detecting a page start signal;
(b) capturing an image line;
(c) checking for an end of page signal;
(d) if said end of page signal is detected go to step (h), if no end of page signal is detected go to step (e);
(e) detecting image edge pixels;
(f) performing a single pass connected contour pixel component analysis;
(g) go to step (b);
(h) collecting said connected contour pixel components;
(i) selecting a largest component; and
(j) analyzing said largest component to obtain said skew angle and said border of said document.

**2.** A method as in claim 1 wherein said step of detecting image edge pixels is comprised of:

computing an image intensity gradient in a 3x3 moving window; and
thresholding said intensity gradient data to extract an edge bitmap of image objects.

**3.** A method as in claim 1 wherein said step of performing said single pass connected contour pixel component analysis is comprised of:

extracting said image edge pixels in a moving 3x3 local window by means of look up table method and a sequence of template commands.

**4.** A method as in claim 1 wherein said skew angle is obtained by:

detecting an orientation of said largest contour component; and
calculating a skew angle based on said largest contour orientation.

*FIG. 1*

S1 →

IMAGE #1

18

E1 →

14

22

IMAGE #2

20

FIG. 2

18

IMAGE #1

15

19

← S2

20

IMAGE #2

14

23  25

← E2

IMAGE #3

24

FIG. 3

FIG. 4

FIG. 5

| (i -1)<br>(j - 1) | i<br>(j - 1) | (i + 1)<br>(j - 1) |
|---|---|---|
| (i - 1)<br>j | (i, j) | (i + 1)<br>j |
| (i - 1)<br>(j + 1) | i<br>(j + 1) | (i + 1)<br>(j + 1) |

— 50

## FIG. 6

THE EDGE IMAGE

↓

EXTRACT THE EDGE IMAGE CONTOUR PIXELS
IN A MOVING, 3x3 LOCAL WINDOW    — 56

↓

GROUP THE CONNECTED CONTOUR PIXELS
RECORD PIXEL COORDINATES AND THE SIZE
OF THE COMPONENTS    — 58

↓

CONTOUR COMPONENTS

## FIG. 7

FIG. 8

X: THE SCANNED PIXEL
O: THE CURRENT PIXEL

FIG. 10

MOST
SIGNIFICANT BIT

LEAST
SIGNIFICANT BIT

| A | B | C | D | E | F | G | H | I |

| A | B | C |
| D | E | F |
| G | H | I |

3x3 BITMAP PATTERN
(512 BINARY PATTERNS)

9 BITS INTEGER
(0-511 ENTRY OF THE LOOK UP TABLE)

FIG. 9A

| I | I | O |
| I | I | O |
| I | O | I |

| I | I | O | I | I | O | I | O | I |

THE ENTRY NUMBER = 437

FIG. 9B

INPUT
ENTRY NUMBER

64

OUTPUT
TEMPLATE COMMANDS

437 — LOOK UP TABLE — 5,2

FIG. 9C

```
            ┌─────────────────────────────┐
            │ READ COMMAND OF A CONTOUR   │
            │ PIXEL FROM THE LOOK UP TABLE│
            └─────────────────────────────┘
```

READ COMMAND OF A CONTOUR PIXEL FROM THE LOOK UP TABLE

70

IS THE CONTOUR PIXEL A MAX_POINT ?

NO      YES

74

IS THE CONTOUR PIXEL A MIN-POINT ?

NO      YES

72

ADD TWO NEW NODES(Li,Ri) ALONG WITH TWO ASSOCIATED BORDER COORDINATE LISTS IN THE LINK LIST DATA STRINGS. THE TWO NEW NODES ARE ASSIGNED TO THE SAME IDENTIFICATION (L_ID=R_ID =li) WHERE i=1,2,3,....

BORDER PIXEL

76

RECORD AND SAVE THE (x,y) COORDINATE OF THE OUTLINE PIXEL

SCAN FOR NEXT COMMAND

78

THE INCOMING L_ID=R_ID ?

YES      NO

80

A COMPLETE OUTLINE IS FOUND BY RETRACING THE COLLECTED BORDER PIXELS WHICH ARE STORED IN THE BORDER COORDINATE LISTS

SCAN FOR NEXT COMMAND

SCAN AND EXTRACT NEXT OUTLINE PIXEL

SCAN FOR NEXT COMMAND

82

SET L_ID=R_ID AND REMOVE THE TWO NODES FROM THE LINK LIST DATA STRING

SCAN FOR NEXT COMMAND

FIG. 11

FIG. I2A

FIG. 12B

EP 1 184 808 A2

EP 1 184 808 A2

FIG.12C

FIG. 12D

EP 1 184 808 A2

A
B
C
D
E
F
G
H

3
2
1
4
5
7
6
8

L1  I=2   $X_1$ $X_2$ $Y_1$ $Y_2$

R1  I=2   $X_1$ $X_2$ $Y_1$ $Y_2$

L3  I=6   $X_1$ $X_2$ $Y_1$ $Y_2$

L5  I=8   $X_1$ $X_2$ $Y_1$ $Y_2$

R5  I=8   $X_1$ $X_2$ $Y_1$ $Y_2$

R2  I=6   $X_1$ $X_2$ $Y_1$ $Y_2$

NULL

NULL

NULL

R3  I=6   $X_1$ $X_2$ $Y_1$ $Y_2$

L2  I=6   $X_1$ $X_2$ $Y_1$ $Y_2$

FIG. 12E

A
B
C
D
E
F
G
H

$X_1$ $X_2$ $Y_1$ $Y_2$

L3 $I=6$
L5 $I=8$
R5 $I=8$
R2 $I=6$

NULL

NULL

R3 $I=6$
L2 $I=6$

L1 $I=2$
R1 $I=2$

NULL

THE FIRST DETECTED OBJECTS

FIG. 12F

FIG. 12G

THE FIRST DETECTED OUTER BORDER

THE DETECTED INNER BORDER

EP 1 184 808 A2

FIG. 12H

THE FIRST DETECTED OUTER BORDER

THE SECOND DETECTED OUTER BORDER

THE DETECTED INNER BORDER

EP 1 184 808 A2

PARTIAL CONTOUR OF THE
PRECEDING IMAGE (IMAGE NO. I)

NOISE CONTOUR

15

19

NOISE CONTOUR

14

CONTOUR OF IMAGE NO. 2

20

21

25

23

NOISE CONTROL

PARTIAL CONTOUR OF THE
FOLLOWING IMAGE (IMAGE NO. 3)

FIG. 13

EP 1 184 808 A2

TO LARGEST CONTOUR COMPONENT

84

COLLECT THE TOP-MOST INTERSECTION POINTS
OF THE CONTOUR COMPONENT AND VERTICAL LINES
FOR EVERY Dx INCREMENT IN HORIZONTAL
DIRECTION AS SHOWN IN FIGURE 17

86

CALCULATE VERTICAL DISTANCE (Dy) OF EVERY
PAIR OF SELECTED ADJACENT POINTS AND REMOVE
THE PAIR OF POINTS WHERE (Dx) < (Dy)

88

CALCULATE HISTOGRAM OF Dy AND DETECT ITS MODE (Dm)

90

REMOVE THE PAIR OF SELECTED POINTS WHOSE Dy
FALLS OUTSIDE OF THE (Dm-K, Dm+K) RANGE,
WHERE K IS A THRESHOLD VALUE.

92

CALCULATE THE CORRELATION COFFICIENT
(CORR) OF THE REMAINING POINTS

94

CORR > Ck
?

NO → SKEW ANGLE IS SET TO ZERO

YES

96

A SKEWED, SRAIGHT TOP BORDER IS DETECTED
AND ITS SLOPE (SKEW ANGLE) AND ITS EQUATION ARE
THEN COMPUTED BY THE LEAST SQUARE FIT
OF THE DATA POINTS

FIG.14   SKEW ANGLE AND STRAIGHT LINE
EQUATION OF THE TOP BORDER

FIG. 15

CONTOUR OF THE
LARGEST COMPONENT

FIG. 16

BLACK BORDER REGION

INTERSECTION POINTS OF IMAGE SCANNING
LINES AND IMAGE OUTLINE

IMAGE SCANNING LINE

IMAGE OUTLINE

DOCUMENT REGION

FIG. 17

EP 1 184 808 A2